# EUROPEAN PATENT SPECIFICATION

(11) **EP 4 275 779 B1**
(45) Date of publication and mention of the grant of the patent: **04.06.2025**
(21) Application number: 22172992.4
(22) Date of filing: 12.05.2022
(51) Int. Cl.: B01D 25/32, B01D 25/38, B01D 25/12

(54) **DISCHARGE ARRANGEMENT AND METHOD FOR HORIZONTAL FILTRATION EQUIPMENT AND HORIZONTAL FILTRATION EQUIPMENT**
ENTLADUNGSANORDNUNG UND VERFAHREN FÜR EINE HORIZONTALE FILTRATIONSVORRICHTUNG UND HORIZONTALE FILTRATIONSVORRICHTUNG
AGENCEMENT ET PROCÉDÉ DE DÉCHARGE POUR ÉQUIPEMENT DE FILTRATION HORIZONTALE ET ÉQUIPEMENT DE FILTRATION HORIZONTALE

(43) Date of publication of application: 15.11.2023
(73) Proprietor: Metso Finland Oy, 02230 Espoo (FI)
(72) Inventor: Grönvall, Lars, 23131 Trelleborg (SE)
(74) Representative: Boco IP Oy Ab

(56) References cited:
- CN-A- 114 146 460
- CN-U- 210 434 051
- CN-U- 213 159 549
- CN-U- 214 019 390
- CN-U- 214 913 698

## Description

### TECHNICAL FIELD

The present disclosure relates to horizontal filtration equipment, and more particularly to a discharge arrangement for horizontal filtration equipment and a method for horizontal filtration equipment. The present disclosure further concerns the horizontal filtration equipment.

### BACKGROUND

Industrial filters, such as horizontal filtration equipment, are used in separation processes, more specifically to separate solids and liquids.

Horizontal filtration equipment, such as horizontal filter presses, typically discharge the solids, often called cake(s) or filter cake(s), on a conveyor provided below the filter apparatus, such as filter plates. In traditional horizontal filtration equipment, separate doors, or rotating plates, also called a dispatch hatch, are typically used to prevent liquids from ending up on the conveyor. These doors or plates are only opened, when solids are discharged, and closed at other times.

This kind of doors or rotating plates may be problematic in certain applications. Space for their rotative movement must be reserved between the filter apparatus of the equipment and the conveyor, whereby the solids are dropped from a certain height, setting durability requirements for the conveyor. Moving objects near ground may also increase safety risks for people working there and so on.

CN114146460A discloses a multifunctional efficient diaphragm filter, comprising a frame body, a filter press body, hinged water baffles, a driving cylinder, a crushing roller connected with a motor, and a conveying belt, which improves the processing efficiency of titanium dioxide solids and automatically adjusts the positions of the water baffle and crushing roller. CN213159549U discloses a plate frame filter, comprising a rack, a crushing assembly with multiple crushing units and rollers, and a conveying belt arranged below the fixed frame, which eliminates the need for manual handling of filter residues. CN214913698U discloses a chamber type filter press with a conveying structure, comprising a support, a base, a filter plate, a filter plate moving mechanism with a chain wheel combination and a moving trolley, and a material conveying mechanism with a conveying belt, auxiliary roller, supporting roller combination, conveying belt transmission mechanism, and transmission roller, which enables unified collection and treatment of solid waste. CN214019390U discloses a sludge filter pressing device convenient to clean, comprising a main bracket, an upper beam, a sliding moving block with fixedly connected air cylinders, a fixed beam with air blowing extension blocks and scraping plate extension blocks, and a middle beam, which cleans sludge on the filter plate using adjustable scraping plates and high-pressure air blowing. CN210434051U discloses pigment filter pressing equipment, comprising a rack, a filter press body, a conveying device under the filter press body, a main scraper at the tail end of the conveying belt, transverse scrapers at the ends of the main scraper, side scrapers on both outer sides of the main scraper, and a longitudinal scraper on each side scraper, which allows for the unified collection of materials from the conveying belt.

### BRIEF DESCRIPTION OF THE DISCLOSURE

An object of the present disclosure is to provide a new discharge arrangement for horizontal filtration equipment, horizontal filtration equipment and method for horizontal filtration equipment.

The object of the disclosure is achieved by a method and an arrangement which are characterized by what is stated in the independent claims. Some embodiments of the disclosure are disclosed in the dependent claims.

The disclosure is based on the idea of providing a dual-action conveyor enabling discharge of both solids and liquids, in other words solid and liquid material(s), on the same conveyor during different phases of a work cycle of the horizontal filtration equipment.

An advantage of the method and arrangement of the disclosure is that a need for opening and closing doors or plates and potential problems related to them are avoided. This also enables providing the filter apparatus of the horizontal filtration equipment to be provided closer to the conveyor, decreasing the wear caused by the solids dropped on the conveyor.

### BRIEF DESCRIPTION OF THE DRAWINGS

In the following the disclosure will be described in greater detail by means of some embodiments with reference to the accompanying drawings, in which
Figure 1 illustrates schematically horizontal filtration equipment shown from a side;
Figure 2 illustrates schematically a discharge arrangement according to an embodiment shown from a side;
Figure 3 illustrates schematically a discharge arrangement according to an embodiment shown from a first end; and
Figure 4 illustrates a method for horizontal filtration equipment.

### DETAILED DESCRIPTION

The disclosure relates to horizontal filtration equipment 1, to a discharge arrangement 10 for horizontal filtration equipment and to a method for horizontal filtration equipment.

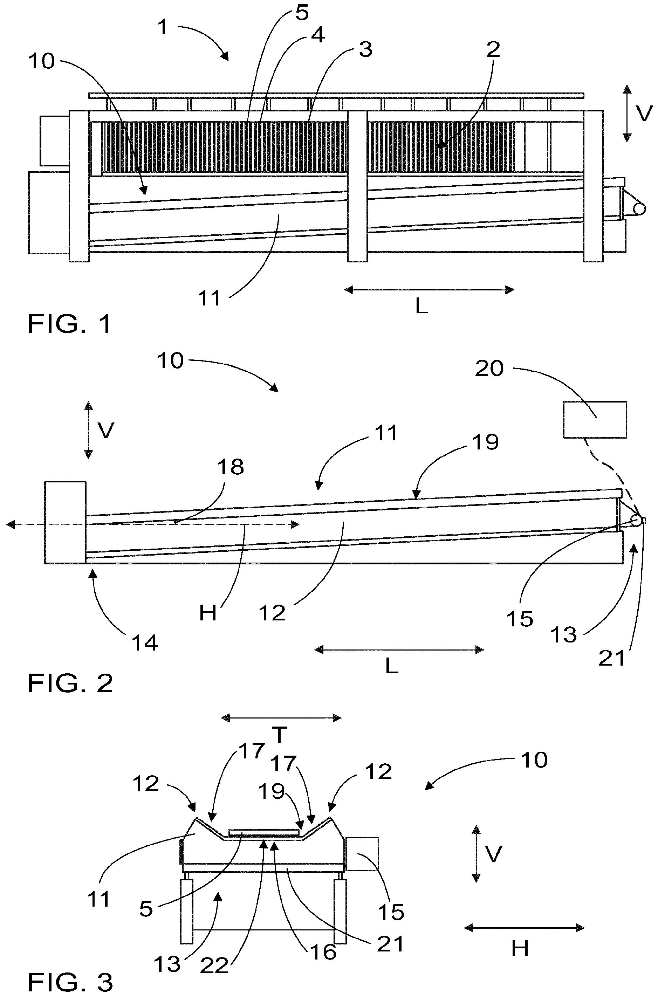

Figure 1 illustrates schematically horizontal filtration equipment shown from a side. A horizontal filtration equipment 1 may comprise a horizontal filter press or another type of a horizontal filtration equipment. The horizontal filtration equipment may comprise a filter apparatus 2 of the filtration equipment, namely the part of the filtration equipment doing the actual separation of the feed material into liquids and solids, in other words into liquid and solid material(s). The liquid material refers to mostly liquid material and solid material refers to mostly solid material. In other words, liquid material refers to material acting like a liquid material, for instance taking a shape of a receptacle it is placed in, whereas solid material refers to material acting like a solid material, for instance keeping an at least partly fixed shape. It is clear for a person skilled in the art that in connection of this type of processes, there may be a certain amount of solids blended in a liquid and a certain among of moisture contained in a solid material.

According to an embodiment, the filter apparatus may comprise an elongated form extending in horizontal direction in a normal use position of the horizontal filtration equipment 1. A normal use position of the horizontal filtration equipment 1 refers to a position, in which the horizontal filtration equipment 1 is intended to be provided during production use.

A horizontal filtration equipment 1, such as a horizontal filter press, typically comprises a plurality of filter plates 3 extending in a vertical direction and provided adjacent to each other in a horizontal direction. The filter plates 3 are connected to each other in a movable manner, such that the filter plates 3 are movable in relation to each other in a horizontal direction H. More particularly, the filter plates 3 are preferably configured to be pressed against each other in a filtration phase of a work cycle of the filtration equipment 1, forming in each case a filter chamber 4 between two adjacent filter plates 3. During the filtration phase, material to be filtered, slurry, is fed into the filter chambers and liquid filtrate is separated therefrom while the solid contents of the slurry form filter cakes 5 within the filter chambers. The liquid filtrate may be discharged during the filtration phase, during another phase or in a separate phase of the work cycle. Subsequently, in a discharge phase of the work cycle of the filtration equipment 1, the filter plates 3 are moved away from each other to open the filter chambers and to discharge the filter cakes therefrom. When the filter cakes 5 are discharged, the work cycle may start again and the filter plates 3 may again be pressed against each other, and this sequence is then repeated. According to an embodiment, the work cycle of the filtration equipment 1 may further comprise a washing phase. In the washing phase, the filter apparatus 2, such as the filter plates 3 and/or other parts of the filter apparatus, are washed with a liquid. In certain embodiments, the work cycle of the filtration equipment 1 may have different and/or further additional phases not described here. Such filter apparatuses 2 and their filtration principles are known as such, whereby they are not explained here in more detail.

According to an embodiment, a horizontal filtration equipment 1 may comprise a filter apparatus 2 and a discharge arrangement 10.

Figure 2 illustrates schematically a discharge arrangement 10 according to an embodiment shown from a side, and Figure 3 illustrates schematically a discharge arrangement 10 according to an embodiment shown from a first end 13.

A discharge arrangement 10 for horizontal filtration equipment, such as the discharge arrangements 10 of Figures 2 and 3, may comprise a conveyor 11. The conveyor 11 may be configured to be provided below the horizontal filtration equipment 1, more particularly under the filter apparatus 2, for receiving discharge material discharged from the horizontal filtration equipment 1. According to an embodiment, the conveyor 11 may have an elongated shape, two sides 12 extending in the longitudinal direction L of the conveyor 11, a first end 13 at one end of the sides 12 and a second end 14 at the opposite end of the sides 12.

The discharge arrangement 10 for horizontal filtration equipment may also comprise a drive 15 for driving the conveyor 11. The drive 15 may be configured to enable driving the conveyor 11 in two opposite directions, such that material provided on the conveyor 11 can be discharged at either the first end 13 or the second end 14 depending on the direction in which the conveyor 11 is driven. According to an embodiment, material provided on the conveyor may comprise material discharged from the filtration equipment 1. The material discharged from the filtration equipment may comprise liquid material(s) and/or solid material(s). According to an embodiment, solid material discharged from the filtration equipment 1 may comprise filter cake(s) 5, preferably filter cake(s) 5 comprising minerals. Filter cakes produced by horizontal filtration equipment 1 and comprising minerals are typically heavy and have a low moisture content. According to an embodiment, the drive 15 may comprise an electric drive, a pneumatic drive, a hydraulic drive, or a drive of some other type capable of driving the conveyor 11 in two opposite directions.

According to an embodiment, the conveyor 11 may be configured to receive both liquid and solid material(s). The liquid material(s) may comprise filtrate, water, washing liquid and/or other liquid material(s) received on the conveyor 11. The solids, in other words solid material(s), may comprise filter cake(s), preferably filter cake(s) comprising minerals. According to an embodiment, the conveyor may be configured to receive both filtrate liquid, which thus is a liquid material, and solids such as filter cakes 5, from the horizontal filtration equipment 1.

According to an embodiment, the conveyor 11 may be configured to discharge solid material(s) at one end 13, 14 of the conveyor and the liquid material(s) at the other end. According to an embodiment, solid material(s) may be discharged at the same time as the liquid material(s) but at different ends 13, 14. According to another embodiment, solid material(s) and liquid material(s) may be discharged at different times or time intervals, such as during different phases of the work cycle of the filtration equipment 1. According to an embodiment, the conveyor 11 may be configured to discharge solid material(s) at the first end 13 of the conveyor and the liquid material(s) at the second end 14.

According to an embodiment, the conveyor 11 may be configured to discharge at least one solid material and at least one liquid material at a same end of the conveyor, but at different times of time intervals, such as during different phases of the work cycle.

According to an embodiment, the conveyor 11 may comprise a conveyor belt. According to a further embodiment, the conveyor belt may be bent upwards at both sides 12, such that the conveyor belt has in a transverse direction T a middle part 16 and two side parts 17, one on each side of the middle part 16, such as shown in Figure 3. Preferably, at least the side parts 17 are bent upwards from a middle point 22 of the conveyor belt. The middle point 22 refers to a point of the longitudinal centre line of the conveyor 11 at a given position along the length of the conveyor. According to an embodiment, the middle part 16 and the side parts 17, and thus the whole conveyor belt bent upwards at both sides, is formed as a uniform and continuous structure. According to an embodiment, the middle part 16 and the side parts 17 are made of a same material. These features are particularly beneficial in embodiments, in which both liquid and solid materials are conveyed by the conveyor 11.

According to an embodiment, the conveyor 11 may be provided at an angle 18 in relation to a horizontal direction H in such a manner that the first end 13 is provided at a higher position than the second end 14 in relation to the horizontal direction H. More particularly, the upper surface 19 of the conveyor 11 configured to receive the material discharged from the filtration equipment 1, such as the filter cake(s) 5, may be provided at the angle 18. In other words, the upper surface 19 of the conveyor 11 at the first end 13 provided higher in a direction of an acceleration due to gravity vector, which is parallel to the vertical direction V, than the upper surface 19 of the conveyor 11 at the second end 14.

The discharge arrangement 10 further comprises a control unit 20 configured to control the drive 15 to drive the conveyor 11 alternatively in a first direction and a second direction. The first direction is a direction directed towards the first end 13, such that the conveyor 11 is configured to discharge material provided on the conveyor 11 at the first end 13. The second direction is a direction directed towards the second end 14, such that the conveyor 11 is configured to discharge material provided on the conveyor 11 at the second end 14. In embodiments, in which the conveyor 11 is provided at an angle 18 with the first end 13 provided at a higher position, the material provided on the conveyor 11 is thus conveyed upwards in the first direction and downwards in the second direction. According to an embodiment, the control unit 20 is configured to control the drive 15 to drive the conveyor 11 in the first direction in a first phase of a work cycle of the discharge arrangement 10, and thus the work cycle of the filtration equipment 1, and in the second direction in a second phase of the work cycle. According to an embodiment, the first phase of the work cycle comprises a discharge phase, wherein filter cakes 5 received on the conveyor 11 from the horizontal filtration equipment 1 are discharged from the conveyor 11, and wherein the second phase of work cycle comprises a washing phase, wherein washing liquid is received on the conveyor. According to an embodiment, the washing liquid may comprise filtrate collected from the filter apparatus 2.

According to an embodiment, the conveyor 11 may be provided with a cleaning member 21 at least at one end 13, 14 of the conveyor 11. According to an embodiment, the cleaning member 21 may comprise a scraper. The scraper may comprise a scraping blade, plate or other similar structure provided with a surface brought close to or into contact with the upper surface 19 of the conveyor 11. This way, the cleaning member 21 may be configured to clean the upper surface 19 of the conveyor 11 from solids built up and/or stuck onto the upper surface 19 of the conveyor 11. According to an embodiment, the conveyor 11 may be provided with a cleaning member 21 at each end 13, 14 of the conveyor 11. This enables cleaning the conveyor 11 every time it is moved in either the first direction or the second direction. Cleaning the conveyor continuously and/or regularly prevents solids from building up on the upper surface 19 of the conveyor 11. This may lighten the conveyor 11 thus decreasing energy consumption, decrease the wear of the conveyor 11 and lengthen the life cycle of the conveyor.

According to an embodiment, the horizontal filtration equipment 1 may comprise a discharge arrangement 10 according to an embodiment disclosed in this description or a combination of such embodiments.

According to an embodiment, the horizontal filtration equipment 1 may be configured to discharge both filtrate liquid and solids directly onto the conveyor 11. More particularly, the filter apparatus 2 of the filtration equipment 1 may be configured to discharge both filtrate liquid and solids directly onto the conveyor 11. Discharging both filtrate liquid and solids, such as the filter cake(s) 5, directly onto the conveyor 11 refers to an absence of rotating or otherwise movable doors, swivel plates, dispatch hatch or similar structures between the filter apparatus 2 and the conveyor 11, which are typical in traditional filtration equipment 1. Movable and/or rotatable parts are not needed, because it is not necessary to prevent liquids from being provided on the conveyor 11 due to the dual action of the conveyor, namely that the conveyor 11 may be driven, during different phases, in two opposite directions. In other words, the functionality of a dispatch hatch, namely the capability to keep the solids separate from the liquids, is integrated to the conveyor. More particularly, the functionality of a dispatch hatch is integrated to the conveyor in a structural and/or functional manner. The absence of movable doors, swivel plates or similar structures, on the other hand, enables providing the filter apparatus 2 closer to the conveyor 11 in a vertical direction, as no space needs to be reserved for the movement of the movable doors, swivel plates or similar structures. This, on the other hand, enables a shorter discharge distance for the filter cake(s) 5 decreasing the wear and lengthening the life cycle of the conveyor 11. It also improves occupational safety of the people working close to the horizontal filtration equipment 1.

According to an embodiment, the horizontal filtration equipment 1 comprises a horizontal filter press.

According to an embodiment, the discharge arrangement 10 may comprise a structure open towards the filter apparatus 2. In other words, the discharge arrangement 10 may be spaced from the filter apparatus 2 in such manner that the discharge arrangement 10 and the filter apparatus 2 do not form a continuous and/or enclosed structure. According to an embodiment, the discharge arrangement 10 may be configured to be provided at a distance from a lower part of the filter apparatus 2 in such a manner that there is an open space, in other words an uncovered portion, between the sides 12 and/or the ends 13, 14 of the discharge arrangement 10 and the filter apparatus 2.

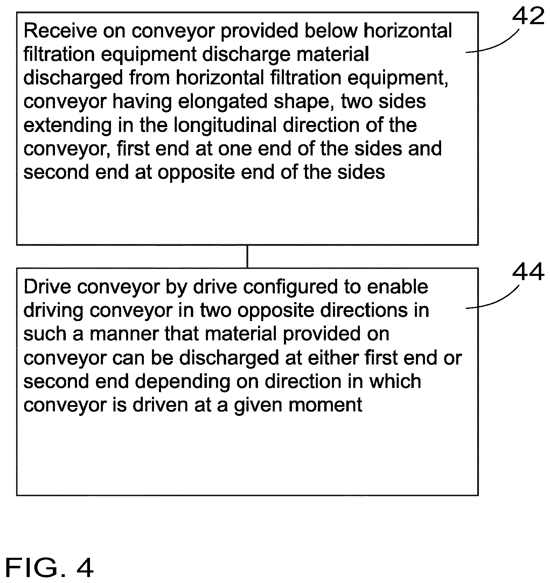

Figure 4 illustrates a method for horizontal filtration equipment. The method for a horizontal filtration equipment 1 may comprise receiving 42 on a conveyor 11 provided below the horizontal filtration equipment 1 discharge material discharged from the horizontal filtration equipment 1. According to an embodiment, the conveyor 11 may have an elongated shape, two sides 12 extending in the longitudinal direction L of the conveyor 11, a first end 13 at one end of the sides and a second end 14 at the opposite end of the sides.

The method may further comprise driving 44 the conveyor 11 by a drive 15 configured to enable driving the conveyor 11 in two opposite directions in such a manner that material provided on the conveyor 11 can be discharged at either the first end 13 or the second end 14 depending on the direction in which the conveyor 11 is driven at a given moment. According to an embodiment, the conveyor 11 may be provided at an angle 18 in relation to a horizontal direction H in such a manner that the first end 13 is provided at a higher position than the second end 14 in relation to the horizontal direction H.

The drive 15 is controlled by a control unit 20 to drive the conveyor 11 alternatively in a first direction, which is a direction directed towards the first end 13, such that the conveyor 11 is configured to discharge material provided on the conveyor 11 at the first end 13, and in a second direction, which is a direction directed towards the second end 14, such that the conveyor 11 is configured to discharge material provided on the conveyor 11 at the second end 14. According to an embodiment, the method may further comprise driving the conveyor 11 in the first direction in a first phase of a work cycle of the discharge arrangement, and thus a work cycle of the horizontal filtration equipment, and in the second direction in a second phase of the work cycle.

According to an embodiment, the first phase of the work cycle may comprise a discharge phase, wherein filter cakes 5 received on the conveyor 11 from the horizontal filtration equipment are discharged from the conveyor 11, and wherein the second phase of work cycle comprises a washing phase, wherein washing liquid is received on the conveyor 11. The washing liquid may comprise liquid filtrate collected from the filter apparatus 1 or a separate liquid provided for washing the filter apparatus 2, the conveyor 11 and/or the filtration equipment 1.

According to an embodiment, the method may comprise driving the conveyor 11 in a discharge phase in a first direction, receiving solids, such as filter cake(s) 5, discharged from the filter apparatus 2 on the conveyor 11, conveying the solids upwards towards the first end 13 and discharging the solids from the conveyor at the first end 13. The method may further comprise driving the conveyor 11 in a washing phase in a second direction, receiving liquid material, such as filtrate or a washing liquid, from the filter apparatus 2 on the conveyor 11, conveying the liquid material downwards towards the second end 14 and discharging liquids from the conveyor 11 at the second end 14.

According to an embodiment, the conveyor 11 is provided with a cleaning member 21 at least at one end 13, 14, preferably at both ends 13, 14, of the conveyor 11. According to an embodiment, the method further comprises cleaning the conveyor 11 by cleaning member 21 in each case when the conveyor 11 is driven towards the end 13, 14 provided with the cleaning member 21.

According to an embodiment, the method according to any embodiment disclosed in this description may be implemented by a discharge arrangement 10 according to any one embodiment or a combination of embodiments and/or by a horizontal filtration equipment according to any one embodiment or a combination of embodiments described in this description.

## Claims

1. A discharge arrangement (10) for horizontal filtration equipment (1), the discharge arrangement (10) comprising
a conveyor (11) configured to be provided below the horizontal filtration equipment (1) for receiving discharge material discharged from the horizontal filtration equipment (1), and
a drive (15) for driving the conveyor (11), **characterized in that**
the drive (15) is configured to enable driving the conveyor (11) in two opposite directions, such that material provided on the conveyor (11) can be discharged at either a first end (13) or a second end (14) depending on the direction in which the conveyor (11) is driven, and that
the discharge arrangement (10) further comprises a control unit (20) configured to control the drive (15) to drive the conveyor (11) alternatively in a first direction, which is a direction directed towards the first end (13), such that the conveyor (11) is configured to discharge material provided on the conveyor (11) at the first end (13), and in a second direction, which is a direction directed towards the second end (14), such that the conveyor (11) is configured to discharge material provided on the conveyor (11) at the second end (14).

2. A discharge arrangement (10) according to claim 1, wherein the conveyor (11) comprises a conveyor belt.

3. A discharge arrangement (10) according to claim 2, wherein the conveyor belt is bent upwards at both sides (12), such that the conveyor belt has in a transverse direction a middle part (16) and two side parts (17), one on each side (12) of the middle part (16), wherein at least the side parts (17) are bent upwards from a middle point (22) of the conveyor belt.

4. A discharge arrangement (10) according to any one of claim 1 - 3, wherein the conveyor (11) is provided at an angle (18) in relation to a horizontal direction in such a manner that the first end (13) is provided at a higher position than the second end (14) in relation to the horizontal direction.

5. A discharge arrangement (10) according to any one of claim 1 - 4, wherein the conveyor (11) is configured to receive both liquid and solid material(s) from the horizontal filtration equipment (1).

6. A discharge arrangement (10) according to claim 5, wherein the control unit (20) is configured to control the drive (15) to drive the conveyor (11) in the first direction in a first phase of a work cycle of the discharge arrangement (10) and in the second direction in a second phase of the work cycle.

7. A discharge arrangement (10) according to claim 6, wherein the first phase of the work cycle comprises a discharge phase, wherein filter cakes (5) received on the conveyor (11) from the horizontal filtration equipment (1) are discharged from the conveyor (11), and wherein the second phase of work cycle comprises a washing phase, wherein washing liquid is received on the conveyor (11).

8. A discharge arrangement (10) according to any one of claims 5 - 7, wherein the conveyor (11) is configured to discharge the solid material(s) at one end of the conveyor (11) and the liquid material(s) at the other end.

9. A discharge arrangement (10) according to any one of claims 5 - 7, wherein the conveyor (11) is configured to discharge at least one solid material and at least one liquid material at a same end of the conveyor (11), but at different phase of the work cycle.

10. A discharge arrangement (10) according to any one of claims 1 - 9, wherein the conveyor (11) is provided with a cleaning member (21) at least at one end of the conveyor (11).

11. A horizontal filtration equipment (1), **characterized in that** the horizontal filtration equipment (1) comprises a discharge arrangement (10) according to any one of claim 1 - 10 and a filter apparatus (2).

12. A horizontal filtration equipment (1) according to claim 11, wherein the horizontal filtration equipment (1) is configured to discharge both liquid and solid material(s) directly onto the conveyor (11).

13. A horizontal filtration equipment (1) according to claim 11 or 12, wherein the horizontal filtration equipment (1) comprises a horizontal filter press.

14. A horizontal filtration equipment (1) according to any one of claims 11 - 13, wherein the discharge arrangement (10) comprises a structure open towards the filter apparatus (2).

15. A method for a horizontal filtration equipment (1), the method comprising
receiving (42) on a conveyor (11) provided below the horizontal filtration equipment (1) discharge material discharged from the horizontal filtration equipment (1), the conveyor (11) having an elongated shape, two sides (12) extending in the longitudinal direction of the conveyor (11), a first end (13) at one end of the sides (12) and a second end (14) at the opposite end of the sides (12), **characterized in that** the method further comprises
driving (44) the conveyor (11) by a drive (15) configured to enable driving the conveyor (11) in two opposite directions in such a manner that material provided on the conveyor (11) can be discharged at either the first end (13) or the second end (14) depending on the direction in which the conveyor (11) is driven at a given moment, wherein the drive (15) is controlled by the control unit (20) to drive the conveyor (11) alternatively in a first direction, which is a direction directed towards the first end (13), such that the conveyor (11) is configured to discharge material provided on the conveyor (11) at the first end (13), and in a second direction, which is a direction directed towards the second end (14), such that the conveyor (11) is configured to discharge material provided on the conveyor (11) at the second end (14).

16. A method according to claim 15, wherein
the conveyor (11) is provided at an angle (18) in relation to a horizontal direction in such a manner that the first end (13) is provided at a higher position than the second end (14) in relation to the horizontal direction, wherein
the method comprises
driving the conveyor (11) in the first direction in a first phase of a work cycle of the discharge arrangement (10) and in the second direction in a second phase of the work cycle.

17. A method according to claim 15 or 16, wherein the first phase of the work cycle comprises a discharge phase, wherein filter cakes (5) received on the conveyor (11) from the horizontal filtration equipment (1) are discharged from the conveyor (11), and wherein the second phase of work cycle comprises a washing phase, wherein washing liquid is received on the conveyor (11).

18. A method according to any one of claims 15 - 17, wherein the method is implemented by a discharge arrangement (10) according to any one of claims 1 - 10 and/or by a horizontal filtration equipment (1) according to any one of claims 11 - 14.

## Patentansprüche

1. Austragsanordnung (10) für eine horizontale Filtrationseinrichtung (1), wobei die Austragsanordnung (10) umfasst:
eine zur Bereitstellung unterhalb der horizontalen Filtrationseinrichtung (1) vorgesehene Fördervorrichtung (11) zur Aufnahme von aus der horizontalen Filtrationseinrichtung (1) ausgetragenem Austragsmaterial, und
einen Antrieb (15) zum Antreiben der Fördervorrichtung (11), **gekennzeichnet dadurch, dass**
der Antrieb (15) dazu ausgelegt ist, das Antreiben der Fördervorrichtung (11) in zwei entgegengesetzten Richtungen zu ermöglichen, so dass auf der Fördervorrichtung (11) bereitgestelltes Material in Abhängigkeit von der Richtung, in der die Fördervorrichtung (11) angetrieben wird, entweder an einem ersten Ende (13) oder an einem zweiten Ende (14) ausgetragen werden kann, und dass
die Austragsanordnung (10) ferner eine Steuereinheit (20) umfasst, die zur Steuerung des Antriebs (15) ausgelegt ist, um die Fördervorrichtung (11) alternativ in einer ersten Richtung, die eine zum ersten Ende (13) gerichtete Richtung ist, anzutreiben, so dass die Fördervorrichtung (11) dazu ausgelegt ist, ein auf der Fördervorrichtung (11) bereitgestelltes Material am ersten Ende (13) auszutragen, und in einer zweiten Richtung, die eine zum zweiten Ende (14) gerichtete Richtung ist, anzutreiben, so dass die Fördervorrichtung (11) dazu ausgelegt ist, ein auf der Fördervorrichtung (11) bereitgestelltes Material am zweiten Ende (14) auszutragen.

2. Austragsanordnung (10) nach Anspruch 1, wobei die Fördervorrichtung (11) ein Förderband umfasst.

3. Austragsanordnung (10) nach Anspruch 2, wobei das Förderband an beiden Seiten (12) nach oben gekrümmt ist, so dass das Förderband in Querrichtung einen mittleren Teil (16) und zwei seitliche Teile (17), einen auf jeder Seite (12) des mittleren Teils (16), aufweist, wobei mindestens die seitlichen Teile (17) ausgehend von einem Mittelpunkt (22) des Förderbands nach oben gekrümmt sind.

4. Austragsanordnung (10) nach einem der Ansprüche 1 bis 3, wobei die Fördervorrichtung (11) mit einem Winkel (18) zur horizontalen Richtung derart vorgesehen ist, dass das erste Ende (13) im Verhältnis zur horizontalen Richtung an einer höheren Position als das zweite Ende (14) vorgesehen ist.

5. Austragsanordnung (10) nach einem der Ansprüche 1 bis 4, wobei die Fördervorrichtung (11) dazu ausgelegt ist, sowohl flüssige(s) als auch feste(s) Material(ien) aus der horizontalen Filtrationseinrichtung (1) aufzunehmen.

6. Austragsanordnung (10) nach Anspruch 5, wobei die Steuereinheit (20) dazu ausgelegt ist, den Antrieb (15) so zu steuern, dass er die Fördervorrichtung (11) in einer ersten Phase eines Arbeitszyklus der Austragsanordnung (10) in der ersten Richtung und in einer zweiten Phase des Arbeitszyklus in der zweiten Richtung antreibt.

7. Austragsanordnung (10) nach Anspruch 6, wobei die erste Phase des Arbeitszyklus eine Austragsphase umfasst, wobei Filterkuchen (5), die aus der horizontalen Filtrationseinrichtung (1) auf der Fördervorrichtung (11) aufgenommen werden, von der Fördervorrichtung (11) ausgetragen werden, und wobei die zweite Phase des Arbeitszyklus eine Waschphase umfasst, wobei Waschflüssigkeit auf der Fördervorrichtung (11) aufgenommen wird.

8. Austragsanordnung (10) nach einem der Ansprüche 5 bis 7, wobei die Fördervorrichtung (11) dazu ausgelegt ist, das/die feste(n) Material(ien) an einem Ende der Fördervorrichtung (11) und das/die flüssige(n) Material(ien) am anderen Ende auszutragen.

9. Austragsanordnung (10) nach einem der Ansprüche 5 bis 7, wobei die Fördervorrichtung (11) dazu ausgelegt ist, mindestens ein festes Material und mindestens ein flüssiges Material an einem gleichen Ende der Fördervorrichtung (11), aber in einer unterschiedlichen Phase des Arbeitszyklus auszutragen.

10. Austragsanordnung (10) nach einem der Ansprüche 1 bis 9, wobei die Fördervorrichtung (11) an mindestens einem Ende der Fördervorrichtung (11) mit einem Reinigungselement (21) versehen ist.

11. Horizontale Filtrationseinrichtung (1), **gekennzeichnet dadurch, dass** die horizontale Filtrationseinrichtung (1) eine Austragsanordnung (10) nach einem der Ansprüche 1 bis 10 und eine Filtervorrichtung (2) umfasst.

12. Horizontale Filtrationseinrichtung (1) nach Anspruch 11, wobei die horizontale Filtrationseinrichtung (1) dazu ausgelegt ist, sowohl flüssige(s) als auch feste(s) Material(ien) direkt auf die Fördervorrichtung (11) auszutragen.

13. Horizontale Filtrationseinrichtung (1) nach Anspruch 11 oder 12, wobei die horizontale Filtrationseinrichtung (1) eine horizontale Filterpresse umfasst.

14. Horizontale Filtrationseinrichtung (1) nach einem der Ansprüche 11 bis 13, wobei die Austragsanordnung (10) eine zur Filtervorrichtung (2) hin offene Struktur umfasst.

15. Verfahren für eine horizontale Filtrationseinrichtung (1), wobei das Verfahren umfasst:
Aufnehmen (42) von aus der horizontalen Filtrationseinrichtung (1) ausgetragenem Austragsmaterial auf einer unterhalb der horizontalen Filtrationseinrichtung (1) vorgesehenen Fördervorrichtung (11), wobei die Fördervorrichtung (11) eine längliche Form, zwei sich in Längsrichtung der Fördervorrichtung (11) erstreckende Seiten (12), ein erstes Ende (13) an einem Ende der Seiten (12) und ein zweites Ende (14) am entgegengesetzten Ende der Seiten (12) aufweist, **gekennzeichnet dadurch, dass** das Verfahren ferner umfasst:
Antreiben (44) der Fördervorrichtung (11) durch einen Antrieb (11), der dazu ausgelegt ist, das Antreiben der Fördervorrichtung (11) in zwei entgegengesetzten Richtungen zu ermöglichen, derart, dass auf der Fördervorrichtung (11) bereitgestelltes Material in Abhängigkeit von der Richtung, in der die Fördervorrichtung (11) zu einem gegebenen Zeitpunkt angetrieben wird, entweder am ersten Ende (13) oder am zweiten Ende (14) ausgetragen werden kann,
wobei der Antrieb (15) durch die Steuereinheit (20) gesteuert wird, um die Fördervorrichtung (11) alternativ in einer ersten Richtung, die eine zum ersten Ende (13) gerichtete Richtung ist, anzutreiben, so dass die Fördervorrichtung (11) dazu ausgelegt ist, ein auf der Fördervorrichtung (11) bereitgestelltes Material am ersten Ende (13) auszutragen, und in einer zweiten Richtung, die eine zum zweiten Ende (14) gerichtete Richtung ist, anzutreiben, so dass die Fördervorrichtung (11) dazu ausgelegt ist, ein auf der Fördervorrichtung (11) bereitgestelltes Material am zweiten Ende (14) auszutragen.

16. Verfahren nach Anspruch 15, wobei
die Fördervorrichtung (11) mit einem Winkel (18) zur horizontalen Richtung derart vorgesehen ist, dass das erste Ende (13) im Verhältnis zur horizontalen Richtung an einer höheren Position als das zweite Ende (14) vorgesehen ist, wobei das Verfahren umfasst:
Antreiben der Fördervorrichtung (11) in der ersten Richtung in einer ersten Phase eines Arbeitszyklus der Austragsanordnung (10) und in der zweiten Richtung in einer zweiten Phase des Arbeitszyklus.

17. Verfahren nach Anspruch 15 oder 16, wobei die erste Phase des Arbeitszyklus eine Austragsphase umfasst, wobei Filterkuchen (5), die aus der horizontalen Filtrationseinrichtung (1) auf der Fördervorrichtung (11) aufgenommen werden, von der Fördervorrichtung (11) ausgetragen werden, und wobei die zweite Phase des Arbeitszyklus eine Waschphase umfasst, wobei Waschflüssigkeit auf der Fördervorrichtung (11) aufgenommen wird.

18. Verfahren nach einem der Ansprüche 15 bis 17, wobei das Verfahren durch eine Austragsanordnung (10) nach einem der Ansprüche 1 bis 10 und/oder durch eine horizontale Filtrationseinrichtung (1) nach einem der Ansprüche 11 bis 14 realisiert wird.

## Revendications

1. Agencement de décharge (10) pour un équipement de filtration horizontal (1), l'agencement de décharge (10) comprenant
un convoyeur (11) configuré pour être prévu sous l'équipement de filtration horizontal (1) pour accueillir du matériau de décharge en provenance de l'équipement de filtration horizontal (1), et
un dispositif d'entraînement (15) pour entraîner le convoyeur (11), **caractérisé en ce que**
le dispositif d'entraînement (15) est configuré pour autoriser l'entraînement du convoyeur (11) dans deux directions opposées de sorte qu'un matériau prévu sur le convoyeur (11) peut être déchargé soit à une première extrémité (13), soit à une deuxième extrémité (14), en fonction de la direction dans laquelle le convoyeur (11) est entraîné, et que
l'agencement de décharge (10) comprend également une unité de commande (20) configurée pour commander le dispositif d'entraînement (15) pour entraîner le convoyeur (11) alternativement dans une première direction, qui est une direction dirigée vers la première extrémité (13), de telle sorte que le convoyeur (11) est configuré pour décharger un matériau prévu sur le convoyeur (11) à la première extrémité (13), et dans une deuxième direction, qui est une direction dirigée vers la deuxième extrémité (14), de telle sorte que le convoyeur (11) est configuré pour décharger un matériau prévu sur le convoyeur (11) à la deuxième extrémité (14).

2. Agencement de décharge (10) selon la revendication 1, dans lequel le convoyeur (11) comprend une bande transporteuse.

3. Agencement de décharge (10) selon la revendication 2, dans lequel la bande transporteuse est courbée vers le haut des deux côtés (12) de telle sorte que la bande transporteuse, dans une direction transversale, comporte une partie centrale (16) et deux parties latérales (17), une de chaque côté (12) de la partie centrale (16) dans laquelle au moins les parties latérales (17) sont courbées vers le haut à partir d'un point central (22) de la bande transporteuse.

4. Agencement de décharge (10) selon l'une des revendications 1 à 3, dans lequel le convoyeur (11) est prévu à un angle (18) par rapport à une direction horizontale de telle sorte que la première extrémité (13) est prévue à une position plus élevée que la deuxième extrémité (14) par rapport à la direction horizontale.

5. Agencement de décharge (10) selon l'une des revendications 1 à 4, dans lequel le convoyeur (11) est configuré pour accueillir du/des matériau(x) tant liquide(s) que solide(s) en provenance de l'équipement de filtration horizontal (1).

6. Agencement de décharge (10) selon la revendication 5, dans lequel l'unité de commande (20) est configurée pour commander le dispositif d'entraînement (15) pour entraîner le convoyeur (11) dans la première direction dans une première phase d'un cycle de travail de l'agencement de décharge (10) et dans la deuxième direction dans une deuxième phase du cycle de travail.

7. Agencement de décharge (10) selon la revendication 6, dans lequel la première phase du cycle de travail comprend une phase de décharge dans laquelle des gâteaux de filtre (5) accueillis sur le convoyeur (11) en provenance de l'équipement de filtration horizontal (1) sont déchargés du convoyeur (11), et dans lequel la deuxième phase du cycle de travail comprend une phase de lavage dans laquelle du liquide de lavage est accueilli sur le convoyeur (11).

8. Agencement de décharge (10) selon l'une des revendications 5 à 7, dans lequel le convoyeur (11) est configuré pour décharger le(s) matériau(x) solide(s) à une extrémité du convoyeur (11) et le(s) matériau(x) liquide(s) à l'autre extrémité.

9. Agencement de décharge (10) selon l'une des revendications 5 à 7, dans lequel le convoyeur (11) est configuré pour décharger au moins un matériau solide et au moins un matériau liquide à une même extrémité du convoyeur (11), mais dans une phase différente du cycle de travail.

10. Agencement de décharge (10) selon l'une des revendications 1 à 9, dans lequel le convoyeur (11) est pourvu d'un élément de nettoyage (21) au moins à une extrémité du convoyeur (11).

11. Équipement de filtration horizontal (1), **caractérisé en ce que** l'équipement de filtration horizontal (1) comprend un agencement de décharge (10) selon l'une des revendications 1 à 10 et un appareil de filtre (2).

12. Équipement de filtration horizontal (1) selon la revendication 11, dans laquelle l'équipement de filtration horizontal (1) est configurée pour décharger du/des matériau(x) tant liquide(s) que solide(s) directement sur le convoyeur (11).

13. Équipement de filtration horizontal (1) selon la revendication 11 ou 12, dans lequel l'équipement de filtration horizontal (1) comprend un filtre-presse horizontal.

14. Équipement de filtration horizontal (1) selon l'une des revendications 11 à 13, dans lequel l'agencement de décharge (10) comprend une structure ouverte vers l'appareil de filtre (2).

15. Procédé pour un équipement de filtration horizontal (1), ledit procédé comprenant l'étape consistant à
accueillir (42), sur un convoyeur (11) prévu sous l'équipement de filtration horizontal (1), du matériau déchargé en provenance de l'équipement de filtration horizontal (1), le convoyeur (11) ayant une forme allongée, deux côtés (12) s'étendant dans la direction longitudinale du convoyeur (11), une première extrémité (12) à une extrémité des côtés (12) et une deuxième extrémité (14) à l'extrémité opposée des côtés (12), **caractérisé en ce que** le procédé comprend également l'étape consistant à
entraîner (44) le convoyeur (11) par un dispositif d'entraînement (11) configuré pour autoriser l'entraînement du convoyeur (11) dans deux directions opposées de telle sorte que le matériau prévu sur le convoyeur (11) peut être déchargé soit à la première extrémité (13), soit à la deuxième extrémité (14), en fonction de la direction dans laquelle le convoyeur (11) est entraîné à un moment donné,
le dispositif d'entraînement (15) étant commandé par l'unité de commande (20) pour entraîner le convoyeur (11) alternativement dans une première direction, qui est une direction dirigée vers la première extrémité (13), de telle sorte que le convoyeur (11) est configuré pour décharger un matériau prévu sur le convoyeur (11) à la première extrémité (13), et dans une deuxième direction, qui est une direction dirigée vers la deuxième extrémité (14), de telle sorte que le convoyeur (11) est configuré pour décharger un matériau prévu sur le convoyeur (11) à la deuxième extrémité (14).

16. Procédé selon la revendication 15, dans lequel
le convoyeur (11) est prévu à un angle (18) par rapport à une direction horizontale de telle sorte que la première extrémité (13) est prévue à une position plus élevée que la deuxième extrémité (14) par rapport à la direction horizontale, ledit procédé comprenant l'étape consistant à
entraîner le convoyeur (11) dans la première direction dans une première phase d'un cycle de travail de l'agencement de décharge (10) et dans la deuxième direction dans une deuxième phase du cycle de travail.

17. Procédé selon la revendication 15 ou 16, dans lequel la première phase du cycle de travail comprend une phase de décharge dans laquelle des gâteaux de filtre (5) accueillis sur le convoyeur (11) en provenance de l'équipement de filtration horizontal (1) sont déchargés du convoyeur (11), et dans lequel la deuxième phase du cycle de travail comprend une phase de lavage dans laquelle du liquide de lavage est accueilli sur le convoyeur (11).

18. Procédé selon l'une des revendications 15 à 17, dans lequel le procédé est réalisé par un agencement de décharge (10) selon l'une des revendications 1 à 10 et/ou par un équipement de filtration horizontal (1) selon l'une des revendications 11 à 14.
